Europäisches Patentamt

European Patent Office

Office européen des brevets

(11) Veröffentlichungsnummer : **0 054 769**
**B1**

(12) # EUROPÄISCHE PATENTSCHRIFT

(45) Veröffentlichungstag der Patentschrift :
21.03.84

(51) Int. Cl.³ : **A 23 J   7/00, C 07 F   9/10**

(21) Anmeldenummer : **81110044.5**

(22) Anmeldetag : **01.12.81**

(54) **Verfahren zur Abtrennung von Öl und/oder Phosphatidylethanolamin aus diese enthaltenden alkohollöslichen Phosphatidylcholin-Produkten.**

(30) Priorität : **13.12.80 DE 3047011**

(43) Veröffentlichungstag der Anmeldung :
**30.06.82 Patentblatt 82/26**

(45) Bekanntmachung des Hinweises auf die Patenterteilung : **21.03.84 Patentblatt 84/12**

(84) Benannte Vertragsstaaten :
**AT BE CH FR GB IT LI LU NL SE**

(56) Entgegenhaltungen :
**DE-A- 2 915 614**
**CHEMICAL ABSTRACTS, Band 52, Nr. 12, 25. Juni 1958, Spalte 10613b, Columbus, Ohio, USA GIO- VANNI DE ZOTTI et al.: "Column chromatography of soybean phosphatides" & OLII MINERALI, GRASSI E SAPONI, COLORI E VERNICI 34**
**CHEMICAL ABSTRACTS, Band 82, Nr. 23, 9. Juni 1975, Seite 526, Nr. 155382t, Columbus, Ohio, USA & JP - A - 7493400 (DAIGO NUTRITIVE CHEMICALS, LTD.) 05-09-1974 (cat. D)**

(73) Patentinhaber : **A. Nattermann & Cie. GmbH**
**Nattermannallee 1**
**D-5000 Köln 30 (DE)**

(72) Erfinder : **Bernd-Rainer, Günther, Dr.**
**Auf der Höhe 31**
**D-5010 Bergheim-Fliesteden (DE)**

(74) Vertreter : **Redies, Bernd, Dr. rer. nat. et al**
**Redies, Redies, Türk & Gille Brucknerstrasse 20**
**D-4000 Düsseldorf 13 (DE)**

**0 054 769**

Verfahren zur Abtrennung von Öl und/oder Phosphatidylethanolamin aus diese enthaltenden alkohollöslichen Phosphatidylcholin-Produkten

Die vorliegende Erfindung betrifft ein Verfahren zur Abtrennung von Öl und/oder Phosphatidylethanolamin aus diese enthaltenden alkohollöslichen Phosphatidylcholin-Produkten unter Herstellung von Öl und/oder Phosphatidylethanolamin in bestimmten verminderten Mengen enthaltendem Phosphatidylcholin unter Chromatographie an Kieselgel.

In der Lebensmittel- und Kosmetikindustrie werden Phosphatid-Gemische benötigt, die neben Phosphatidylcholin Öl und/oder Phosphatidylethanolamin in ganz bestimmten Mengen enthalten, welche gegenüber dem Gehalt von aus natürlichen Phospholipiden erhältlichen Phosphatidylcholin-Produkten vermindert ist.

Die bei der Speiseöl-Herstellung anfallenden pflanzlichen Rohphosphatide enthalten neben Phosphatidylcholin Phosphatidylethanolamin und Mono-, Di- und Triglyceride (Öl) sowie Phosphatidylinosid und andere phosphorhaltige Glycerinester und Substanzen wie Peptide, Aminosäuren, Stearine, Stearinester, freie Fettsäuren und Kohlehydratderivate. Für die Abtrennung der im Rohphosphatid enthaltenen Begleitsubstanzen sind schon mehrere Verfahren beschrieben. In der Regel wird das pflanzliche Rohphosphatid in einem ersten Schritt im Aceton entölt (DE-AS 1 053 299, US-PS 3 268 335, DE-AS 1 047 597) und dann im zweiten Schritt mit Ethanol extrahiert (US-PS 2 724 649). Im dritten Schritt wird die ethanolische Phosphatidfraktion einer Säulenchromatographie bei Temperaturen unterzogen, die 35 °C nicht übersteigen (US-PS 3 031 478). Bei der acetonischen Entölung werden in geringen Mengen Acetonfolgeprodukte wie Mesityloxid, Diacetonalkohol, Phoron u. a. gebildet. Die Entfernung dieser toxischen und wegen ihres charakteristischen Eigengeruchs störend wirkenden Substanzen ist sehr aufwendig, zum Teil sogar unmöglich. Außerdem ist die acetonische Entölung mit einem Anstieg der Peroxide verbunden, deren nachteilige physiologische Einflüsse bekannt sind.

Die alkoholische Extraktion von pflanzlichen Rohphosphatiden führt zu einer ölhaltigen Phosphatidfraktion (DE-OS 2 718 797, DE-PS 1 492 952, DE-AS 1 692 568), aus der nach chromatographischer Behandlung bei Raumtemperatur eine ölhaltiges, Phosphatidylethanolamin-freies Phosphatidylcholin gewonnen werden kann. Nach einer eigenen Patentanmeldung (P 30 23 814.3) gelingt es, durch Zugabe einer geringen Wassermenge das Öl abzuscheiden und ein hochgereinigtes ölfreies Phosphatidylcholin zu gewinnen. Insgesamt stellt aber auch diese wässrige Entölung bei der Gewinnung von ölfreiem Phosphatidylcholin einen Dreistufenprozeß (Extraktion, Chromatographie, Entölung) dar, der zudem mit der Aufarbeitung wässriger Ethanollösungen behaftet ist.

Bei all diesen Verfahren geht es um die Abtrennung der Gesamtmenge der Begleitsubstanzen des Phosphatidylcholins. Keines der Verfahren läßt sich so steuern, daß Phosphatidylcholin-Produkte mit einem ganz bestimmten, im voraus gewählten Gehalt an Öl und/oder Phosphatidylethanolamin herstellen lassen. Weiterer Nachteil der vorbekannten Verfahren in technischem Maßstab ist der Umstand, daß das eingesetzte Adsorptionsmittel, nämlich basisches Aluminiumoxid, nach der Chromatographie mit den Vereunreinigungen, insbesondere mit Phosphatidylethanolamin belegt ist und daher verworfen werden muß. Ein weiterer Nachteil liegt in der Bildung von Lysophosphatidylcholin während der Chromatographie (O. Rengkonen, J. Lipid. Res. *3*, 181-3 (1962), D. Van Damme et al., Int. Symp. Chromatogr. Elektrophoresis, 5th, 1968 (Pub. 1969), 268-78).

Der Chromatographie über Kieselgel kommt bisher nur analytische und präparative Bedeutung zu. So werden Phosphatide in Hexanlösungen von Kieselgel nicht adsorbiert (JA-PS 77 012 202, US-PS 3 869 482), während sie in alkoholischen Lösungen von Kieselgel zurückgehalten werden (H. Richter et al., Pharmazie, 1977, 32 (3), 164). Das unterschiedliche Verhalten ist mit der Bildung lipophiler, polymolekularer Phosphatidmicellen in Hexan gegenüber den molekular vorliegenden Phosphatiden in Alkohol zu erklären. Die Chromatographie wird auch hier bei Raumtemperatur durchgeführt. Die Trennung und selektive Desorption der Phosphatide erfolgt bei Verwendung alkoholischer Phosphatidlösungen entweder mit Alkohol/Ammoniak (JA-PS 49 093 400) oder mit Gemischen aus Chloroform/Methanol (C. H. Lea et al., Biochem. J. *60*, 353-63 (1965)) bzw. Chloroform/Methanol/Wasser (DDR-PS 79 916). Diese Verfahrensweise hatte bisher keine technische Bedeutung, da als Elutionsmittel immer Gemische toxischer Substanzen, wie Ammoniak oder Chloroform, verwendet wurden, deren Wiedergewinnung und Entfernung aus dem Lecithin sehr aufwendig ist.

Handelsübliche Phosphatidylcholin-Rohprodukte, insbesondere aus Sojabohnenphosphatiden, stellen durch Extraktion mit Alkohol gewonnene Produkte dar, die alkohollöslich sind und Öl und Phosphatidylethanolamin als Hauptverunreinigung enthalten. Es gibt jedoch auch Phosphatidylcholin-Rohprodukte, die, wie beschrieben, nur noch die eine oder andere der beiden Hauptverunreinigungen enthalten. Der vorliegenden Erfindung liegt die Aufgabe zugrunde, ein Verfahren zur Abtrennung von Öl und/oder Phosphatidylethanolamin aus diese enthaltenden alkohollöslichen Phosphatidylcholin-Produkten unter Herstellung von solchen Phosphatidylcholin-Produkten zu schaffen, daß den einen oder beide dieser Verunreinigungen in einer bestimmten, gegenüber den handelsüblichen Phosphatidylcholin-Rohprodukten verminderten Menge enthalten, je nachdem, wie es für den Einsatz in der Lebensmittel- oder Kosmetikindustrie gefordert wird.

Es wurde nun überraschenderweise festgestellt, daß man aus alkohollöslichen, Öl und/oder Phosphatidylethanolamin enthaltenden Phosphatidfraktionen mittels einer Kieselsäuregel-Säulenchromatographie bei höheren Temperaturen derartige Phosphatidylcholin-Produkte herstellen kann.

Das erfindungsgemäße Verfahren zur Abtrennung von Öl und/oder Phosphatidylethanolamin aus diese enthaltenden alkohollöslichen Phosphatidylcholin-Produkten unter Herstellung von Öl und Phosphatidylethanolamin in bestimmten verringerten Mengen enthaltendem Phosphatidylcholin ist dadurch gekennzeichnet, daß man die Lösung des Öl und/oder Phosphatidylethanolamin enthaltenden alkohollöslichen Phosphatidylcholin-Produktes in einem $C_{1-4}$-Niederalkanol, der bis zu 20 Vol.% Wasser enthalten kann, oder einem solchen Gemisch mehrerer $C_{1-4}$-Niederalkanole bei einer erhöhten Temperatur unterhalb 60 °C auf eine Säule aus Kieselgel gibt, bei dieser Temperatur mit einem gegebenenfalls bis zu 20 Vol.% Wasser enthaltendem $C_{1-4}$-Niederalkanol oder einem solchen Gemisch mehrerer $C_{1-4}$-Niederalkanole die Säule eluiert und dabei einen Vorlauf abtrennt, der Öl und/oder Phosphatidylethanolamin in dem Umfang enthält, un den der Gehalt im Phosphatidylcholin vermindert werden soll, und getrennt hiervon den Restlauf sammelt und das Lösungsmittel aus dem Restlauf in üblicher Weise abtrennt.

Bevorzugt wird als Eluierungsmittel das verwendete Lösungsmittel eingesetzt, was das Verfahren besonders einfach gestaltet. Bevorzugter $C_{1-4}$-Niederalkanol ist Ethanol.

Die Menge Vorlauf hängt von dem eingesetzten Phosphatidylcholin-Produkt und der gewünschten abzutrennenden Menge Öl und/oder Phosphatidylethanolamin ab. Im Verlauf befinden sich je nach eingesetztem Phosphatidylcholin-Produkt auch die anderen üblicherweise anwesenden Begleitsubstanzen wie Sterine, Sterinderivate, Glycolipide und Phospholipide, die einer Weiterverwendung zugeführt werden können.

Durch einfach analytische Methoden kann festgestellt werden, ab wann bei der jeweils angewandten erhöhten Temperatur der Vorlauf die Menge in dem Umfang enthält, um den der Gehalt im Phosphatidylcholin gegenüber dem Gehalt im Phosphatidylcholin-Ausgangsprodukt vermindert ist, so daß die Gesamtmenge des sich hieran anschließenden Eluats als Hauptlauf beim Abtrennen des Lösungsmittels ein Phosphatidylcholin-Produkt ergibt, das Öl und/oder Phosphatidylethanolamin in der im gewünschten Umfang gegenüber dem Ausgangsprodukt verminderten Menge enthält.

Als Kieselgel können übliche Produkte für die Chromatographie verschiedener Körnung oder auch gepreßtes Kieselgel, das aktiviert oder desaktiviert werden kann, eingesetzt werden. Bevorzugt werden neutrale Kieselgel-Produkte verwendet.

Das erfindungsgemäße Verfahren kann bei Normaldruck oder auch Überdruck durchgeführt werden. Ein ganz besonderer Vorteil des erfindungsgemäßen Verfahrens besteht darin, daß man das Kieselgel nach erfolgter Chromatographie immer wieder einsetzen kann. Nach dem Hauptlauf verbleibt nur noch eine geringe Restbelegung von Phosphatidylcholin. Ein weiterer Vorteil des Kieselgels liegt in der sehr hohen Belastbarkeit des Sorptionsmittels. So werden in einer säulenchromatographischen Trennung mit 100 Teilen Kieselgel ca. 60 Teile Feststoff aus der alkohollöslichen Phosphatidfraktion getrennt.

## Beispiele

### Analytik

Die Phosphatide wurden auf dünnschichtchromatographischem Weg analysiert. Der Ölgehalt wurde dem Dialysierbaren gleichgesetzt. Das Wasser wurde nach Karl Fischer und der Restethanolgehalt gaschromatographisch bestimmt.

### Säulenchromatographie

Es wurde eine Doppelmantelchromatographiersäule (Innendurchmesser 4,5 cm, Höhe 37 cm) eingesetzt. Der Säule vorgeschaltet war ein Wärmeaustauscher, um eine gleiche Säulen- und Aufgabetemperatur zu gewährleisten. Die Säule wurde mit einer Aufschlämmung von 200 g Kieselgel (Merck) in dem jeweils angegebenen Lösungsmittel gefüllt. Nach erfolgter Chromatographie kann das Kieselgel wieder benutzt werden.

### Ausgangsmaterial

Sojarohphosphatid wird bei 35 °C mit 95 Vol.-%igem Ethanol im Gewichtsverhältnis 1 : 2,5 (Rohphosphatid : Ethanol) extrahiert. Das Sediment wird bei Raumtemperatur von der überstehenden Ethanolphase abgetrennt. Die Ethanolphase wird eingedampft. Der dabei erhaltene Feststoff hat folgende Zusammensetzung :

| | |
|---|---|
| Phosphatidylcholin (PC) : | 43 % |
| Phosphatidylethanolamin (PE) : | 12 % |
| Öl : | 21 % |

Dieser Feststoff wurde für die Beispiel 1 eingesetzt.
Der im Beispiel 2 verwendete Feststoff wurde wie folgt hergestellt :

Sojarohphosphatid wird mit Aceton entölt und danach mit 95 Vol.-%igem Ethanol extrahiert. Die ethanollösliche Phosphatidfraktion wird eingedampft und analysiert :

PC-Gehalt : 52 %
PE-Gehalt : 20 %

Ein ölhaltiges Phosphatidylethanolamin-freies Phosphatidylcholin-Produkt ist mit seiner Herstellung in der DE-OS 2 718 797 (Beispiel 3) beschrieben.

Beispiel 1

Es wird eine Säulenchromatographie bei unterschiedlichen Temperaturen durchgeführt.

Säulenauftrag : Je 118 g Feststoff zu 275 g 95 Vol.-%igem Ethanol
Elutionsmittel : 95 Vol.-%iges Ethanol für 4 l Eluat
Säulentemperatur : 30 °C, 40 °C, 50 °C, 55 °C.

Nach 1 l Vorlauf werden insgesamt 3 l Hauptlauf aufgefangen. Der Hauptlauf wird eingedampft und analysiert. Die Ergebnisse sind in der folgenden Tabelle zusammengefaßt :

| Säulen- temperatur | Feststoff- ausbeute [1] | Zusammensetzung | | | |
|---|---|---|---|---|---|
| | | PC | PE | Öl | Sonst. [2] |
| 30 °C | 53 % | 53 % | 17 % | 25 % | 5 % |
| 40 °C | 42 % | 67 % | 11 % | 17 % | 5 % |
| 50 °C | 37 % | 77 % | 7 % | 11 % | 5 % |
| 55 °C | 35 % | 86 % | 3 % | 6 % | 5 % |

1) bez. auf Ausgangsfeststoff in % d. Th.
2) sonstige Bestandteile

Beispiel 2

Säulenauftrag : 110 g Feststoff (ethanollösliche Fraktion aus entöltem Rohphosphatid) in 40 g 95 Vol.-%igem Ethanol
Elutionsmittel : 95 Vol.-%iges Ethanol für 4 l Eluat
Säulentemperatur : 50 °C.

Nach 1 l Vorlauf werden insgesamt 3 l Restlauf (Hauptlauf) aufgefangen. Der Restlauf wird eingedampft und analysiert.

Feststoffausbeute : 30 % d. Th.
PC-Gehalt : 86 %
PE-Gehalt : 8 %
Öl-Gehalt : < 1 %
PC-Ausbeute bezogen auf Ausgangsfeststoff : 50 % d. Th.

Beispiel 3

Säulenauftrag : 80 g Feststoff (hergestellt nach der DE-OS 27 18 797, Beispiel 3) in 30 g 95 Vol.-%igem Ethanol
Elutionsmittel : 95 Vol.-%iges Ethanol für 4 l Eluat
Säulentemperatur : 40 °C.

Nach 0,3 l Vorlauf werden 3,7 l Restlauf (Hauptlauf) aufgefangen. Der Restlauf wird eingedampft und analysiert.

Feststoffausbeute : 68 % d. Th.
PC-Gehalt : 80 %
Öl-Gehalt : 15 %
PC-Ausbeute bezogen auf Ausgangsfeststoff : 80 % d. Th.

**0 054 769**

**Ansprüche**

1. Verfahren zur Abtrennung von Öl und/oder Phosphatidylethanolamin aus diese enthaltenden alkohollöslichen Phosphatidylcholin-Produkten unter Herstellung von Öl und Phosphatidylethanolamin in bestimmten verringerten Mengen enthaltendem Phosphatidylcholin, dadurch gekennzeichnet, daß man die Lösung des Öl und/oder Phosphatidylethanolamin enthaltenden alkohollöslichen Phosphatidylcholin-Produktes in einem $C_{1-4}$-Niederalkanol, gegebenenfalls gemischt mit bis zu 20 Gew.-% Wasser, bei einer erhöhten Temperatur unterhalb 60 °C auf eine Säule aus Kieselgel gibt, bei dieser Temperatur mit einem $C_{1-4}$-Niederalkanol die Säule eluiert und dabei einen Vorlauf abtrennt, der Öl und/oder Phosphatidylethanolamin in dem Umfang enthält, um den der Gehalt im Phosphatidylcholin an Öl und/oder Phosphatidylethanolamin vermindert werden soll, und getrennt hiervon den Hauptlauf sammelt und das Lösungsmittel aus dem Hauptlauf in üblicher Weise abtrennt.

2. Verfahren gemäß Anspruch 1, dadurch gekennzeichnet, daß man zur Lösung des Phosphatidylcholin-Ausgangsproduktes und zur Eluierung der Kieselgel-Säule das gleiche Lösungsmittel verwendet.

3. Verfahren gemäß Anspruch 1 oder 2, dadurch gekennzeichnet, daß man als $C_{1-4}$-Niederalkanol Ethanol verwendet.

**Claims**

1. Process for the separation of oil and/or phosphatidyl ethanol amine from alcohol-soluble phosphatidyl choline products containing the latter by producing phosphatidyl choline comprising reduced amounts of oil and phosphatidyl ethanol amine, characterized in that the solution of the alcohol-soluble phosphatidyl choline product comprising oil and/or phosphatidyl ethanol amine is packed in a $C_{1-4}$ lower alkanol, eventually mixed with up to 20 % by weight of water, at an increased temperature below 60 °C on a column of silicious gel, and that said column is eluated at that temperature with a $C_{1-4}$ lower alkanol by separating a first circulation containing oil and/or phosphatidyl ethanol amine in an amount by which the contents of oil and/or phosphatidyl ethanol amine in the phosphatidyl choline is to be reduced, and collecting separately therefrom the main circulation and separating in a usual manner the solvent from the main circulation.

2. Process as defined in claim 1, characterized in that there is used the same solvent for solving the phosphatidyl choline starting product and for eluating the silicious gel column.

3. Process as defined in either of claims 1 or 2, characterized in that ethynol is used as $C_{1-4}$ lower alkanol.

**Revendications**

1. Procédé pour la séparation d'huile et/ou de phosphatidyléthanolamine à partir de produits de phosphatidylcholine solubles dans l'alcool, les contenant, par préparation de phosphatidylcholine contenant de l'huile et de la phosphatidyléthanolamine dans des quantités réduites déterminées, caractérisé en ce que la solution du produit de phosphatidylcholine soluble dans l'alcool et contenant de l'huile et/ou de la phosphatidyléthanolamine, dans un alcanol inférieur en $C_1$ à $C_4$ éventuellement mélangé avec jusqu'à 20 % d'eau, est passée sur une colonne de gel de silice à une température relevée mais restant inférieure à 60 °C, en ce que la colonne est éluée à cette température avec un alcanol inférieur en $C_1$ à $C_4$ et que l'on sépare une fraction de tête contenant de l'huile et/ou de la phosphatidyléthanolamine à raison de la quantité de laquelle la teneur en huile et/ou en phosphatidyléthanolamine de la phosphatidylcholine doit être réduite et en ce que de façon séparée on recueille la fraction principale et l'on sépare de façon classique le solvant de cette fraction principale.

2. Procédé selon la revendication 1, caractérisé en ce que pour la dissolution du produit de départ de phosphatidylcholine et pour l'élution de la colonne de gel de silice on utilise le même solvant.

3. Procédé selon l'une des revendications 1 ou 2, caractérisé en ce qu'en tant qu'alcanol inférieur en $C_1$ à $C_4$ on utilise de l'éthanol.

5